(19) Europäisches Patentamt
European Patent Office
Office européen des brevets

(11) **EP 4 542 466 A1**

(12) **EUROPEAN PATENT APPLICATION**

(43) Date of publication:
**23.04.2025 Bulletin 2025/17**

(21) Application number: **24197553.1**

(22) Date of filing: **30.08.2024**

(51) International Patent Classification (IPC):
**G06N 20/00** (2019.01)     **G06N 10/60** (2022.01)

(52) Cooperative Patent Classification (CPC):
**G06N 10/60; G06N 20/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.10.2023 JP 2023178250**

(71) Applicant: **FUJITSU LIMITED**
**Kawasaki-shi, Kanagawa 211-8588 (JP)**

(72) Inventors:
• **Maruo, Akito**
**Kawasaki-shi, Kanagawa, 211-8588 (JP)**
• **Watanabe, Masaru**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **ARITHMETIC PROGRAM, ARITHMETIC METHOD, AND INFORMATION PROCESSING DEVICE**

(57)     An arithmetic program including instructions which, when executed by a computer, cause the computer to repeatedly execute processing including: creating a plurality of Ising models by creating the Ising models for each of a plurality of characteristic values, based on a training data group that includes a plurality of pieces of training data in which data and the plurality of characteristic values for the data are associated with each other; creating a combined Ising model by combining the plurality of Ising models; searching for the data of a recommended point for the combined Ising model; and adding, to the training data group, the training data that includes the data of the recommended point and the plurality of characteristic values for the data of the recommended point.

FIG. 3A

100

STORAGE UNIT — 10

INITIAL POINT GENERATION UNIT — 20

EVALUATION UNIT — 30

FMDA EXECUTION UNIT — 40

TRAINING DATA UPDATE UNIT — 50

OUTPUT UNIT — 60

EP 4 542 466 A1

## Description

FIELD

The embodiments discussed herein are related to an arithmetic program, an arithmetic method, and an information processing device.

BACKGROUND

A technique for performing optimization using a model is disclosed.

Japanese Laid-open Patent Publication No. 2019-96334, Japanese National Publication of International Patent Application No. 2023-507139, and Japanese National Publication of International Patent Application No. 2023-524236 are disclosed as related art.

SUMMARY

TECHNICAL PROBLEM

For example, it is conceivable to achieve optimization by performing sampling using an Ising model in a quadratic unconstrained binary optimization (QUBO) format. In this case, in a case where a plurality of characteristic values is handled, a feature of each characteristic value may not be reflected in the model, and the model accuracy may be likely to be lowered.

In one aspect, an object of the present case it to provide an arithmetic program, an arithmetic method, and an information processing device capable of improving model accuracy.

SOLUTION TO PROBLEM

According to an aspect of the embodiments, there is provided an arithmetic program including instructions which, when executed by a computer, cause the computer to repeatedly execute processing including: creating a plurality of Ising models by creating the Ising models for each of a plurality of characteristic values, based on a training data group that includes a plurality of pieces of training data in which data and the plurality of characteristic values for the data are associated with each other; creating a combined Ising model by combining the plurality of Ising models; searching for the data of a recommended point for the combined Ising model; and adding, to the training data group, the training data that includes the data of the recommended point and the plurality of characteristic values for the data of the recommended point.

ADVANTAGEOUS EFFECTS OF INVENTION

Model accuracy may be improved.

BRIEF DESCRIPTION OF DRAWINGS

FIG. 1 is a diagram illustrating a search for a solution in a QUBO format;
FIG. 2 is a flowchart representing an execution procedure in a sampling technique using a model in the QUBO format;
FIG. 3A is a block diagram illustrating an overall configuration of an information processing device, and FIG. 3B is a block diagram illustrating a hardware configuration of the information processing device;
FIG. 4 is a flowchart representing an exemplary operation of the information processing device;
FIG. 5A is a diagram illustrating a training data group, and FIGs. 5B and 5C are diagrams illustrating training data groups for each characteristic;
FIG. 6 is a diagram in which an embodiment is summarized in order;
FIG. 7A is a diagram illustrating an optimization problem for a magnetic shield, FIG. 7B is a diagram illustrating locations by a Gaussian basis function, and FIG. 7C is a diagram illustrating magnetic flux lines generated from a coil;
FIG. 8 is a diagram illustrating positive locations and negative locations;
FIG. 9 is a diagram illustrating a shape function;
FIG. 10 is a diagram indicating a simulation result;
FIG. 11 is a diagram indicating a simulation result;

FIG. 12 is a diagram illustrating a case where a data display function is provided in a user interface (UI) that assists in input; and

FIGs. 13A and 13B are examples in which graphs of frequency distribution of respective characteristic values are displayed.

DESCRIPTION OF EMBODIMENTS

As a technique for searching a large number of combinations, orders, and the like for a good solution having a high evaluation value, a binary variable sampling technique is used. As the binary variable sampling technique, a sampling technique for randomly performing sampling, a sampling technique using an Ising model in a QUBO format, or the like is exemplified.

The sampling technique for randomly performing sampling allows sampling to be easily performed, but has a disadvantage that sampling efficiency is poor, and the number of times of sampling will increase in order to obtain a good solution with high accuracy.

For example, as the sampling technique using a model in the QUBO format, a factorization machine with quantum annealing (FMQA) or the like is exemplified. FMQA is an approach in which quantum annealing (QA) and a factorization machine (FM; machine learning approach) are combined. FMQA is an approach for performing interactive sampling in which an FM model in the QUBO format is created from training data, a good solution is obtained by QA an evaluation value of the good solution is analyzed by a solver, and a result is added to the training data. Besides, a factorization machine with digital annealer (FMDA) technique is exemplified as a sampling technique using a model in the QUBO format. FMDA is obtained by replacing the QA portion of FMQA with a digital annealer (DA).

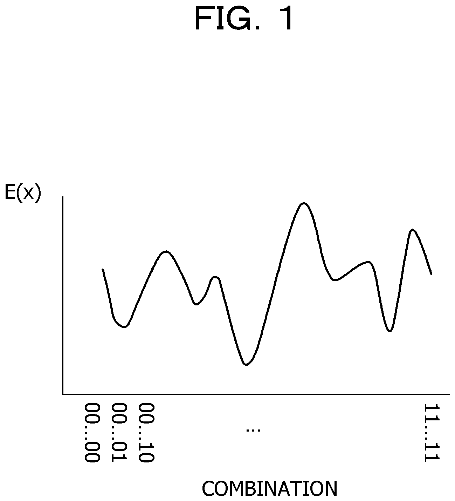

Here, the QUBO format stands for quadratic unconstrained binary optimization that is a format in which binary optimization is allowed without a secondary constraint. The QUBO format can be expressed, for example, as in the following formula. Note that $x_i = 0$ or 1 holds, where ($i = 1, ..., N$) holds. A coupling coefficient of $x_i$ and $x_j$ is denoted by $W_{ij}$. A bias coefficient of x, is denoted by $b_i$. The first term on the right side is a quadratic term and represents an interaction. The second term on the right side is a linear term and represents a bias action. The third term on the right side is a constant term. In the QUBO format, as illustrated in FIG. 1, a good solution x for minimizing E(x) representing energy is searched for, in accordance with the following formula.

[Mathematical Formula 1]

$$E(\boldsymbol{x}) = -\sum_{i,j} W_{ij} x_i x_j - \sum_i b_i x_i + \text{const.}$$

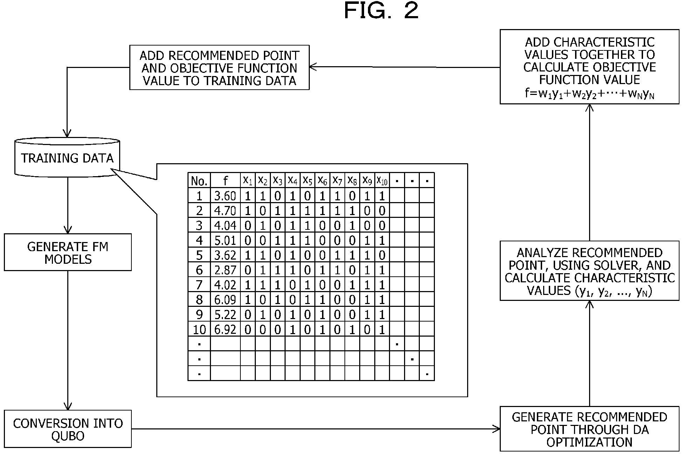

FIG. 2 is a flowchart representing an execution procedure in a sampling technique using an Ising model in the QUBO format. Here, a sampling technique when optimizing a plurality of characteristic values will be described. A training data group is generated by randomly generating initial points of training data. The training data has a vector in the form of x = ($x_1, x_2, ..., x_M$) as data. Each value of the vector data is a binary value of 0 or 1. The number of pieces of training data to be generated is determined by user setting. Next, each characteristic value ($y_1, y_2, ..., y_N$) is calculated for the initial points, using the solver. Next, each characteristic value is weighted and added together. For example, calculation is conducted as in an objective function $f = w_1 y_1 + w_2 y_2 + ... + w_N y_N$, which will be treated as an evaluation value. The evaluation value is an index for assessing whether or not the initial point or a recommended point to be described later is good. Through the above steps, a plurality of pieces of initial training data in which the data of the initial points and the evaluation value are collected as sets is generated and treated as a training data group.

Next, an FM model is created with the training data group and converted into QUBO, whereby an Ising model in the QUBO format is created. Since the FM is in the QUBO format, creating an FM is equivalent to creating an Ising model in the QUBO format. Any other machine learning model can also be used as long as the machine learning model can create an Ising model in the QUBO format.

Next, the created Ising model in the QUBO format is optimized using a DA, and a good solution (DA recommended point) giving the best evaluation value is generated.

Next, the DA recommended point is analyzed using a solver, and the characteristic values ($y_1, y_2, ..., y_N$) are worked out.

Next, in the above-described procedure, each characteristic value is weighted and added together, and the objective function $f = w_1 y_1 + w_2 y_2 + ... + w_N y_N$ is calculated as the evaluation value.

Next, an evaluation result (a set of the recommended point and the evaluation value) is added to the training data group as training data. By repeating a series of these processes, the training data group is updated, allowing an optimal solution to be obtained.

Note that, although the FMDA has been described in FIG. 2, the DA portion of the FMDA may be replaced with QA, and any other approach can also be used as long as its Ising machine is capable of solving QUBO. In addition, apart from using an Ising machine dedicated to solving QUBO, the Ising model may be solved using software.

In such processing, the sampling performance depends on the model accuracy used in the sampling. Specifically, in a case of a problem handling a plurality of characteristic values as described above, if the characteristic values are added together to yield one objective variable value and a model is created for the generated objective variable value, the feature of each characteristic value may be unlikely to be reflected in the model. In this case, the accuracy of the model may be likely to decrease, and as a result, the number of times of sampling may be likely to increase.

Thus, in the following embodiment, an example in which the model accuracy may be improved will be described.

[First Embodiment]

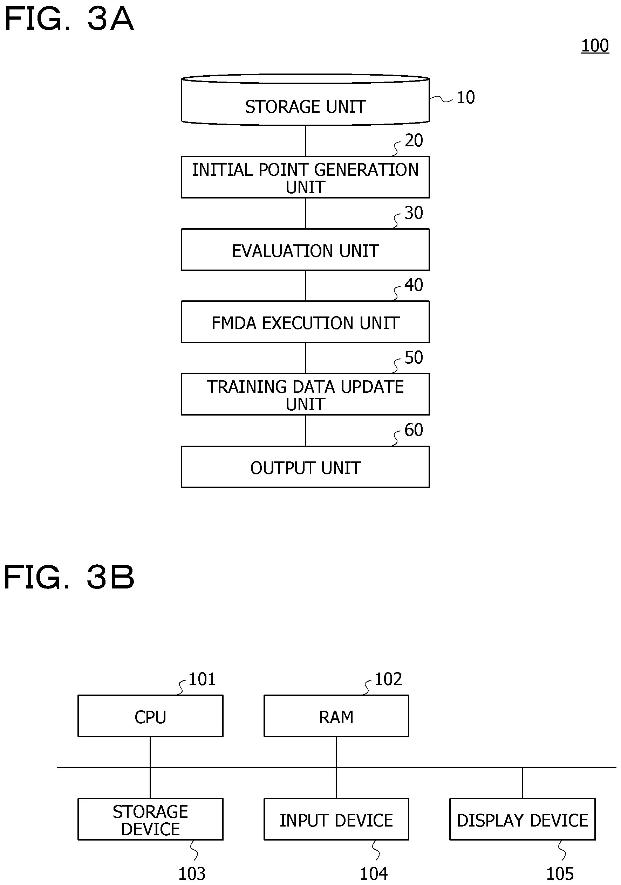

FIG. 3A is a block diagram illustrating an overall configuration of an information processing device 100. As illustrated in FIG. 3A, the information processing device 100 includes a storage unit 10, an initial point generation unit 20, an evaluation unit 30, an FMDA execution unit 40, a training data update unit 50, an output unit 60, and the like.

FIG. 3B is a block diagram illustrating a hardware configuration of the information processing device 100. As illustrated in FIG. 3B, the information processing device 100 includes a central processing unit (CPU) 101, a random access memory (RAM) 102, a storage device 103, an input device 104, a display device 105, and the like.

The central processing unit (CPU) 101 is a central processing device. The CPU 101 includes one or more cores. The random access memory (RAM) 102 is a volatile memory that temporarily stores a program to be executed by the CPU 101, data to be processed by the CPU 101, and the like. The storage device 103 is a nonvolatile storage device. As the storage device 103, for example, a read only memory (ROM), a solid state drive (SSD) such as a flash memory, a hard disk to be driven by a hard disk drive, or the like can be used. The storage device 103 stores an arithmetic program. The input device 104 is an input device such as a keyboard or a mouse. The display device 105 is a display device such as a liquid crystal display (LCD). The storage unit 10, the initial point generation unit 20, the evaluation unit 30, the FMDA execution unit 40, the training data update unit 50, the output unit 60, and the like are implemented by the CPU 101 executing the arithmetic program. Note that hardware such as a dedicated circuit may be used as the storage unit 10, the initial point generation unit 20, the evaluation unit 30, the FMDA execution unit 40, the training data update unit 50, the output unit 60, and the like.

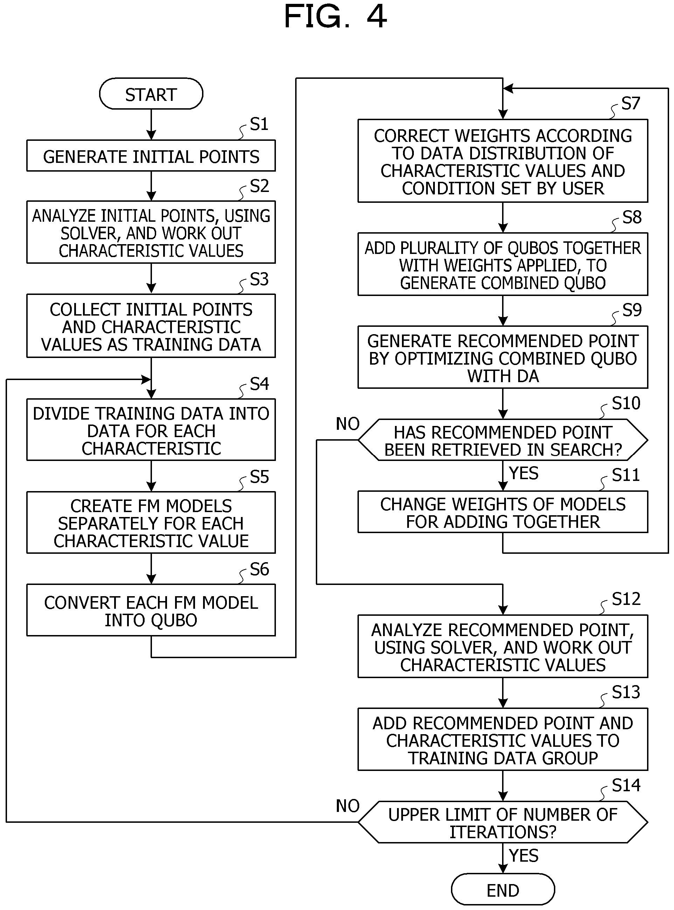

FIG. 4 is a flowchart representing an exemplary operation of the information processing device 100. As illustrated in FIG. 4, the initial point generation unit 20 generates an initial training data group by randomly generating initial points of the training data (step S1). In step S1, the user may designate a pattern to some extent, or a pattern according to a preset law may be used. Examples of the pattern include a pattern with 1 all, a pattern alternately repeating 1 and 0, and a pattern alternately repeating 0 and 1. The number of pieces of training data to be generated is determined by user setting. In addition, the initial points of the training data may be set by the user. The data of the initial points is vector data in the form of $x = (x_1, x_2, ..., x_M)$, and each value is a binary value of 0 or 1.

Next, the evaluation unit 30 calculates characteristic values $(y_1, y_2, ..., y_N)$ each for one of the initial points, using a solver (step S2).

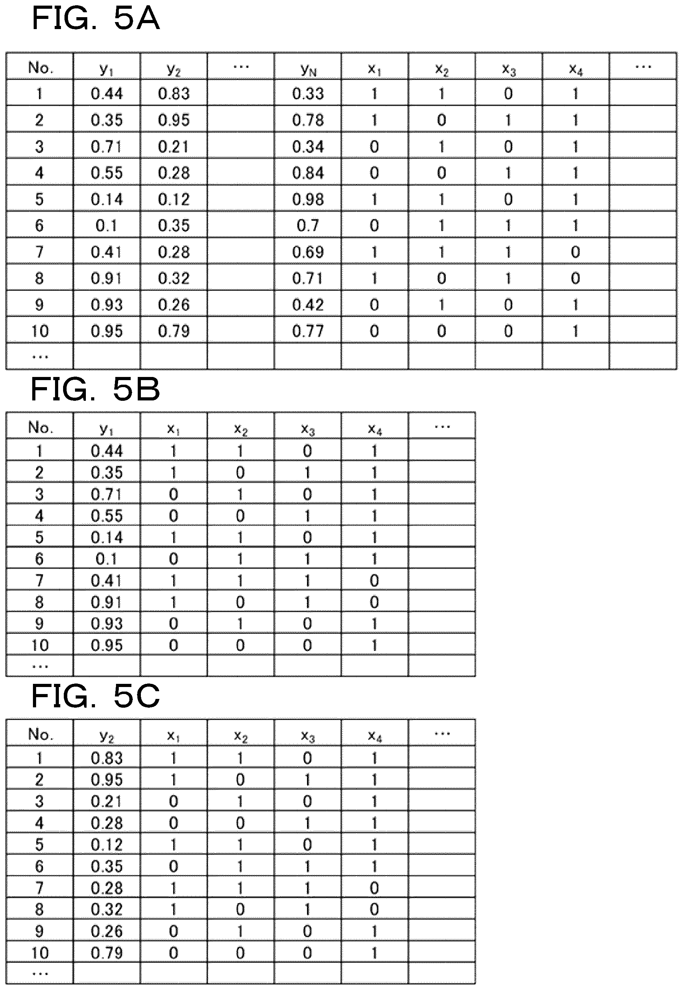

Next, the training data update unit 50 adds initial training data in which the data of the initial points obtained in step S1 and the characteristic values calculated in step S2 are collected as sets, to the training data group stored in the storage unit 10 (step S3). FIG. 5A is a diagram illustrating each piece of the training data included in the training data group.

Next, the FMDA execution unit 40 divides the training data group into data for each characteristic value (step S4). For example, FIG. 5B depicts data for the characteristic value $y_1$, and FIG. 5C depicts data for the characteristic value $y_2$.

Next, the FMDA execution unit 40 creates FM models for each characteristic value obtained in step S4 (step S5). Therefore, an FM model for the characteristic value $y_1$, an FM model for the characteristic value yz, an FM model for the characteristic value $y_3$, and so forth are created.

Next, the FMDA execution unit 40 converts each FM model created in step S5 into QUBO and creates each of Ising models $E_1(x)$, Ez(x), ..., and $E_N(x)$ (step S6). Note that, since the FM is in the QUBO format, creating an FM is equivalent to creating an Ising model in the QUBO format. Any other machine learning model can also be used as long as the machine learning model can create an Ising model in the QUBO format.

Next, the FMDA execution unit 40 corrects weights $w_1, w_2, ...,$ and $w_N$ each for one of the respective Ising models $E_1(x), E_2(x), ...,$ and $E_N(x)$ according to data distribution of the characteristic values and a condition set by the user (step S7).

Next, the FMDA execution unit 40 adds together a plurality of QUBOs, using the weights obtained in step S7, to create a combined QUBO (step S8). For example, $w_1E_1(x) + w_2E_2(x) + ...+ w_NE_N(x)$ is treated as the combined QUBO. Although there is no particular limitation on the value of the weight, in a case where an arithmetic mean is used, $0 \leq w_1, w_2, ..., w_N \leq 1$ and $w_1 + w_2 + ...+ w_N = 1$ only have to hold.

Next, the FMDA execution unit 40 generates a number of DA recommended points equal to a set number of DA recommendations, by optimizing the combined QUBO created in step S8 with a DA (step S9). The set number of DA recommendations is preset by the user. The DA recommended point is a good solution (recommended point) giving the best evaluation value. Alternatively, the DA recommended point is a good solution (recommended point) having an evaluation value equal to or greater than a threshold value. Alternatively, the DA recommended points are good solutions (recommended points) having top evaluation values up to a predetermined place.

Next, the FMDA execution unit 40 verifies whether or not the recommended point obtained in step S9 is a point that has already been retrieved in search (step S10). For example, it is verified whether or not the recommended point obtained in step S9 is included in the training data group stored in the storage unit 10.

In a case where it is verified as "Yes" in step S10, the FMDA execution unit 40 changes at least a part of the weights $w_1$, $w_2$, ..., and $w_N$ each for one of the respective Ising models $E_1(x)$, $E_2(x)$, ..., and $E_N(x)$ (step S11). Thereafter, step S7 and the subsequent steps are executed again.

In a case where it is verified as "No" in step S10, the evaluation unit 30 calculates each of the characteristic values of the data of the recommended point, using the solver (step S12).

Next, the training data update unit 50 adds an evaluation result (a set of the data of the recommended point and each characteristic value) to the training data group as training data (step S13).

Next, the FMDA execution unit 40 verifies whether or not the number of iterations has reached an upper limit (step S14). The number of executions of step S14 can be treated as the number of iterations. The upper limit number of the number of iterations is preset by the user.

In a case where it is verified as "No" in step S14, step S4 and the subsequent steps are executed again. In a case where it is verified as "Yes" in step S14, the execution of the flowchart ends.

The output unit 60 outputs a result of the process in FIG. 4. For example, the output result is displayed on the display device 105. For example, the output unit 60 may output the contents of the training data group, or may output training data having a higher evaluation value in the training data group, as a good solution.

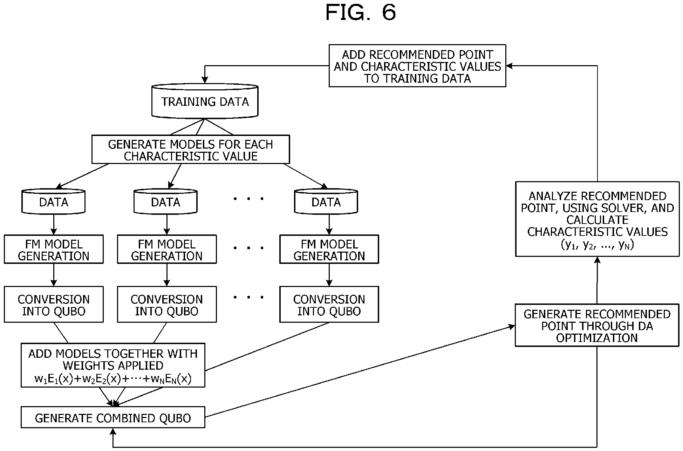

FIG. 6 is a diagram in which the present embodiment is summarized in order. As illustrated in FIG. 6, an initial training data group is generated. As illustrated in FIG. 5A, the initial training data group includes the data of the initial points $x = (x_1, x_2, ..., x_M)$ and each characteristic value $(y_1, y_2, ..., y_N)$.

Next, as illustrated in FIGs. 5B, 5C, and the like, the training data group is divided into data for each characteristic value, FM models are created for each characteristic value, and Ising models are created by conversion into QUBOs. Each model is weighted and added together to create a combined QUBO.

A combined QUBO is used to generate a recommended point through DA optimization. In a case where the recommended point has already been retrieved in search, the weight of each model is changed to create a new combined QUBO, and a recommended point by DA optimization is generated. When the recommended point has not been retrieved in search, the recommended point is analyzed by the solver, and an analysis result for the recommended point is added to the training data. Thereafter, a similar process is repeated with the updated training data.

According to the present embodiment, a combined Ising model is created after creating a plurality of Ising models by creating Ising models for each of a plurality of characteristic values. In this manner, the feature of each characteristic value may be reflected in the combined Ising model. This may improve the model accuracy and as a result, may reduce the number of times of sampling.

(Simulation Result)

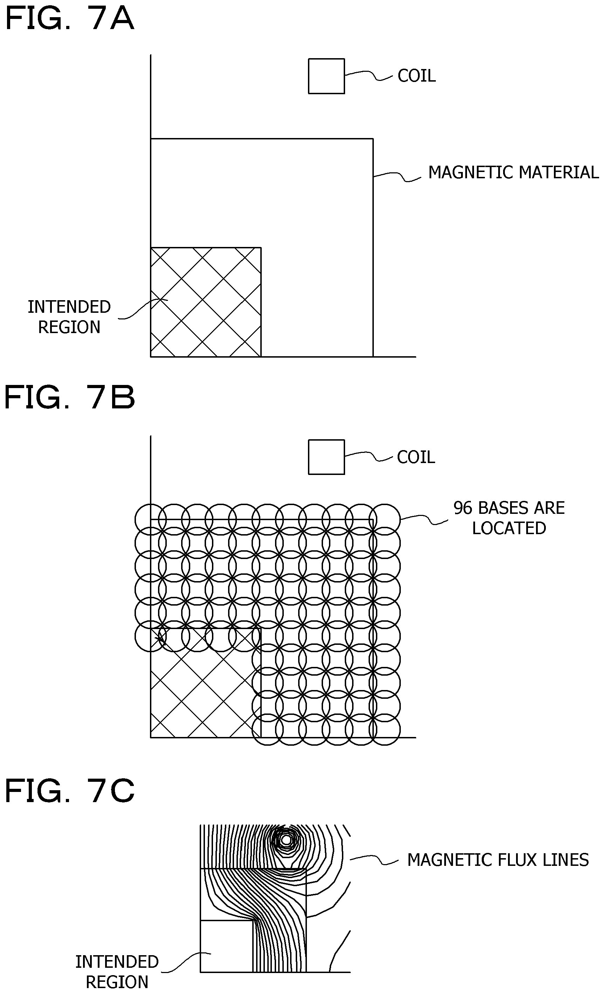

Hereinafter, a simulation result of setting a virtual problem and performing the arithmetic process according to the above embodiment will be described. FIG. 7A is a diagram illustrating an optimization problem for a magnetic shield. FIG. 7A depicts a magnetic shield analysis model and is a diagram illustrating a coil, a design region for a magnetic material, and an intended region. The intended region is a region where the influence of the magnetic flux is desired to be avoided. The design region for the magnetic material is a region for locating the magnetic material. FIG. 7B is a diagram illustrating locations by a Gaussian basis function. As illustrated in FIG. 7B, 96 magnetic materials can be located in the design region for the magnetic material. FIG. 7C is a diagram illustrating magnetic flux lines generated from the coil.

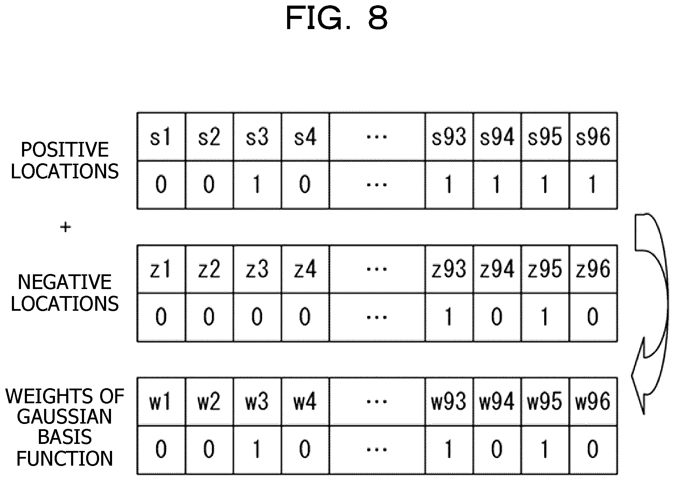

The tables in FIG. 8 are diagrams illustrating positive locations and negative locations. 96 positive located positions are indicated by s1 to s96. In s1 to s96, "0" represents that no magnetic material is located, and "1" represents that a magnetic material is located. 96 negative located positions are indicated by z1 to z96. In z1 to z96, "0" represents that no magnetic material is located, and "1" represents that a magnetic material is located.

This location problem can be represented as a shape function y as in the following formula. In the above formula, $s_i, z_i \in \{0, 1\}$ holds and $w_i \in \{-1, 0, 1\}$ holds. In this manner, the optimization problem for the magnetic shield is regarded as a positive-negative location problem of the Gaussian basis function.

[Mathematical Formula 2]

$$y(x, s, z) = \sum_{i=1}^{N_G} (s_i - z_i) \left\{ G_i(x) / \sum_{j=1}^{N_G} G_j(x) \right\}$$

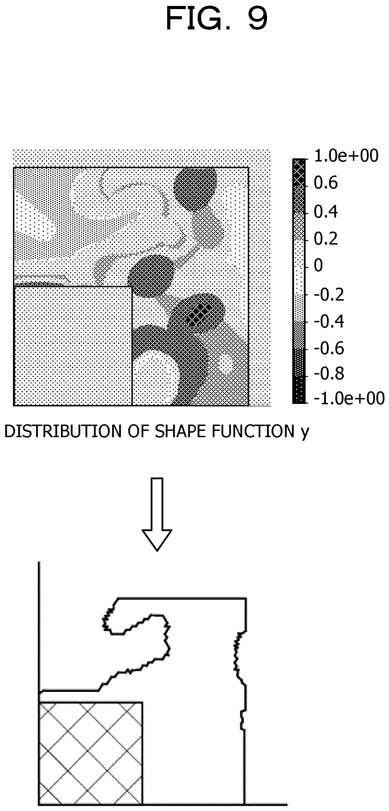

Distribution of the shape function y is as depicted in the upper diagram of FIG. 9. From this result, as depicted in the lower diagram of FIG. 9, material information can be determined from the magnitude of the shape function y. Note that, in the lower diagram of FIG. 9, when the shape function y has zero or greater, a substance is present, and when the shape function y is less than zero, no substance is present.

The purpose of the magnetic shield shape optimization is to minimize magnitude of the average magnetic flux density $B_{ave}^T$ and a magnetic material area $S_{mag}$ in the intended region. The minimization is specifically the minimization in the following formula. Note that $E_1$ has 1/10 of $B_{ave}^T$ when the entire design region is filled with air. $E_2$ denotes $S_{mag}$ when the entire design region is filled with the magnetic material. The characteristic value $y_1$ is assumed as $B_{ave}^T/E_1$, and the characteristic value yz is assumed as $S_{mag}/E_2$.

[Mathematical Formula 3]

$$f = w_1 \frac{1}{E_1} B_{ave}^T + w_2 \frac{1}{E_2} S_{mag} \rightarrow \min.$$

Sampling was performed on this optimization problem by two types of approaches of a comparative example and the present embodiment. As a common setting, the number of initial points was assumed as 192. The number of iterations was assumed as 96 times, the weight $w_1$ of the characteristic value $y_1$ was assumed as 0.5, and the weight $w_2$ of the characteristic value yz was assumed as 0.5. However, as in step S11 in FIG. 4, if a recommended point has been retrieved in search, each weight can change. In the present embodiment, Ising models were created for each characteristic value from the training data group and then combined, and optimization was performed on the Ising models that have been combined. In the comparative example, optimization was performed by creating an Ising model for the objective function = $w_1 y_1 + w_2 y_2$.

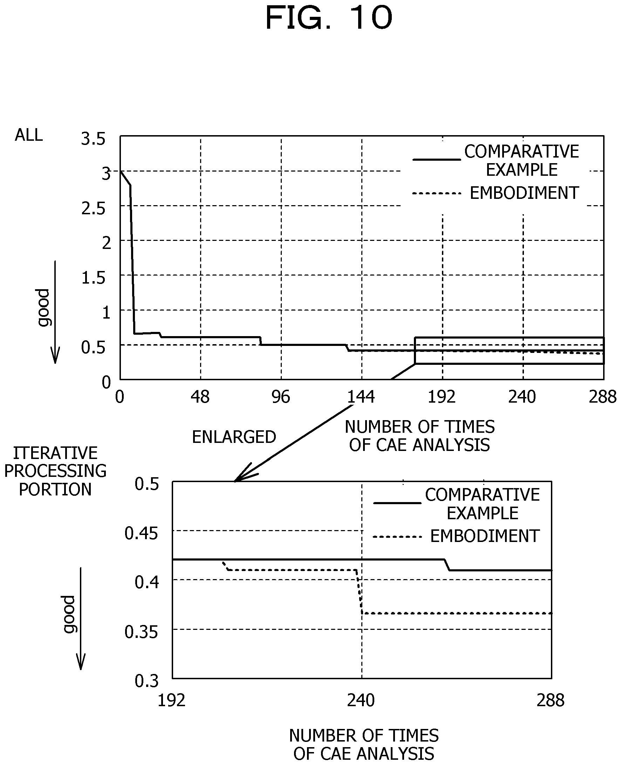

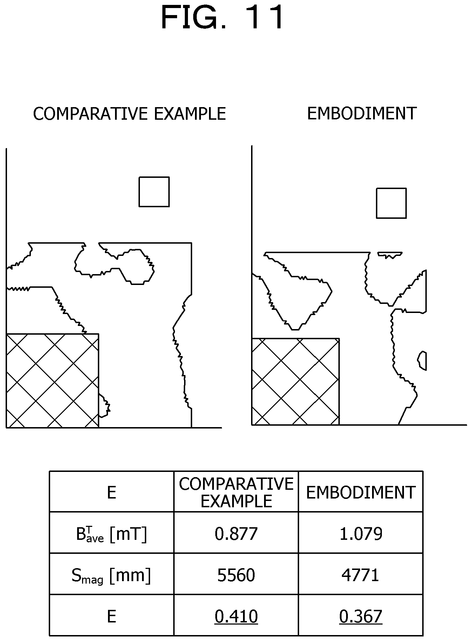

FIGs. 10 and 11 are diagrams indicating results. FIG. 10 indicates the best value found in the search. The vertical axis represents the energy E in the QUBO format. Therefore, in the vertical axis, a smaller value indicates that a better result is obtained. The number of computer aided engineering (CAE) analyses on the horizontal axis indicates the number of iterations. The diagram in the lower part of FIG. 10 is an enlarged diagram obtained by altering the scale of the vertical axis of the diagram in the upper part of FIG. 10. As indicated in FIGs. 10 and 11, it can be seen that the approach of the present embodiment was able to achieve sampling more efficiently than the approach of the comparative example.

Subsequently, an example when a combined Ising model is created from Ising models for each characteristic value will be described. For example, for the weight of each Ising model, a value may be set based on a hypothesis preliminarily supposed by the user or preliminarily limited characteristic value data. For example, statistical values such as an average value, a maximum value, and a minimum value or mathematical features of the characteristic values may be used as a ratio of weights for each Ising model.

For example, when the number of execution cycles of steps S4 to S14 in FIG. 4 increases, the number of pieces of training data included in the training data group increases, and the characteristic values intended to be calculated also increase in number. In this case, the characteristic value data group may sometimes deviate from a mathematical feature supposed preliminarily. In particular, in the present embodiment, since a plurality of characteristic values is used, it may sometimes be difficult to preliminarily suppose the weight of each characteristic value, as compared with a case of using one characteristic value. Thus, automatic correction of the weights may be made with a weight correction method designated by the user.

For example, the weights can be altered during the execution cycle by rewriting the setting value data of the weights referred to by an optimization algorithm during the execution cycle of steps S4 to S14 in FIG. 4. However, in this case, it is preferable that the user appropriately monitor and examine the characteristic value data.

Thus, for example, the automatic correction of the weights based on a correction method preliminarily set by the user can be implemented by automatically correcting the weights from a mathematical feature of the characteristic values, without weight alterations by the user. For example, settings of this automatic correction for the weights can be designated using a user interface (UI) that assists the user when setting the weights. In the UI that assists in setting, the user can confirm the status of the characteristic values and may alter the weights or the correction even during the execution cycle. The UI that assists in setting may include a UI that can display and allows confirmation of the stored characteristic values and data distribution, using a graph. In addition, a conversational artificial intelligence (AI) technique that assists in UI input may be used.

A UI that assists in input of weight setting when creating a combined Ising model will be described. For example, a case where the user sets "2" as the weight $w_2$ for yz according to a preliminary supposition (average values of $y_1$ and $y_2$ are the same) will be described. In this example, the user designates to automatically correct the weight "2" with respect to the average values even if the relationship (ratio) of the average values changes during the execution cycle.

Specific contents of the correction are as follows. When $f = w_1 y_1 + w_2 y_2$ holds, assuming that the correction value is $\alpha$, $w_1 = 1$ and $w_2 = 2 \times \alpha$ are assumed. When an average values of $y_1$ and $y_2$ are assumed as $p_1$ and pz, $\alpha$ is assumed as a correction value satisfying $p_1 : \alpha p_2 = 1 : x$. A supposed value after correction is represented by x. For example, when x = 1 holds, it is indicated that the average value of $y_2$ after correction is the same as the average value of $y_1$. For example, if the user designates the supposed value x = 1, the correction value $\alpha$ has 1.5 when $p_1/p_2 = 1.5$ is yielded during the execution cycle. Therefore, the average values of $y_1$ and $y_2$ have $1 \times y_1 + 2 \times 1.5 y_2$, and the preliminary supposition and the supposition on the average values can be made to have similar weights, by multiplying the average value of yz by 1.5.

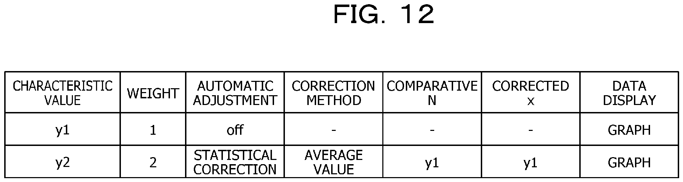

FIG. 12 is a diagram illustrating a case where a data display (such as graph display) function is provided in the UI that assists in input. In the example in FIG. 12, $y_1$ is designated not to be automatically corrected. The example depicts a UI when a correction equivalent to satisfying $p_1 : pz = 1 : 1$ is made on the average value $p_1$ of $y_1$ with respect to the average value pz of $y_2$. For example, the field of "graph" in FIG. 12 may be enabled to display the graph when clicked.

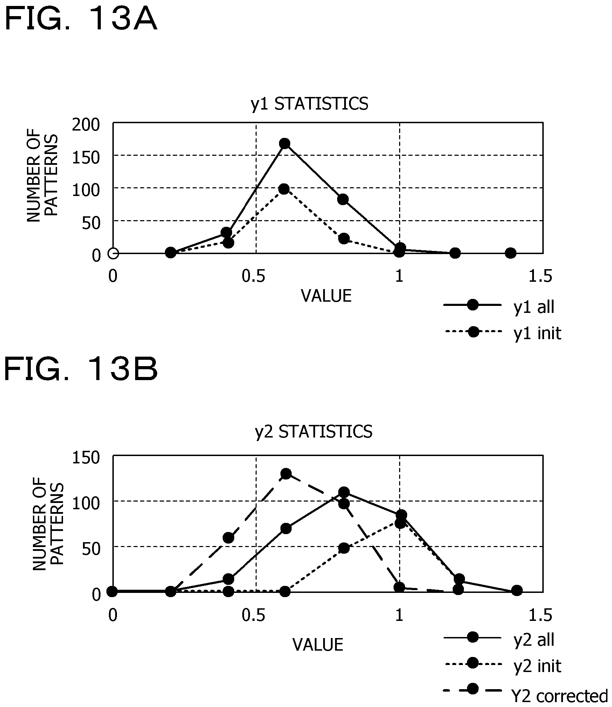

FIG. 13A is an example in which a graph of frequency distribution of the characteristic value $y_1$ is displayed. FIG. 13B is an example in which a graph of frequency distribution of the characteristic value $y_2$ is displayed. In these examples, the statistical data is also displayed together. In FIG. 13A, frequency distribution of initial data (y1 init) and all the data (y1 all) including trained data is displayed. In FIG. 13B, corrected data (y2 corrected) as well as the initial data (y2 init) and all the data (y2 all) are displayed. In FIG. 13A, the average value $p_1$ of $y_1$ of the initial data (y1 init) has 0.50, and the average value $p_1$ of $y_1$ of all the data (y1 all) including the trained data has 0.54. In FIG. 13B, the average value pz of $y_2$ of the initial data (y2 init) has 0.85, the average value pz of $y_2$ of all the data (y2 all) including the trained data has 0.71, and the average value pz of yz of the corrected data (y2 corrected) has 0.54. In this manner, for yz, the average of the corrected characteristic values has the same value as $y_1$.

In the above example, the FMDA execution unit 40 is an example of an execution unit that: creates a plurality of Ising models by creating the Ising models for each of a plurality of characteristic values from a training data group that includes a plurality of pieces of training data in which data and the plurality of characteristic values for the data are associated with each other; creates a combined Ising model by combining the plurality of Ising models; and executes search for the data of a recommended point for the combined Ising model. The training data update unit 50 is an example of an update unit that updates the training data group by adding, to the training data group, the training data that includes the data of the recommended point and the plurality of characteristic values for the data of the recommended point.

While the embodiments have been described above in detail, the embodiments are not limited to such specified embodiments, and various modifications and alterations can be made within the scope of the gist of the embodiments described in the claims.

**Claims**

1. An arithmetic program comprising instructions which, when executed by a computer, cause the computer to repeatedly execute processing comprising:

   creating a plurality of Ising models by creating the Ising models for each of a plurality of characteristic values, based on a training data group that includes a plurality of pieces of training data in which data and the plurality of characteristic values for the data are associated with each other;
   creating a combined Ising model by combining the plurality of Ising models;
   searching for the data of a recommended point for the combined Ising model; and
   adding, to the training data group, the training data that includes the data of the recommended point and the plurality of characteristic values for the data of the recommended point.

2. The arithmetic program according to claim 1, the processing further comprising:
   creating the combined Ising model by weighting each of the plurality of Ising models and adding each of the plurality of Ising models together.

3. The arithmetic program according to claim 2, the processing further comprising:
   correcting the weights according to the plurality of characteristic values.

4. The arithmetic program according to claim 1, wherein, in a case where the recommended point retrieved in the search is already included in the training data group,

   the combined Ising model is recreated when the plurality of Ising models used to search for the recommended point is combined, and
   the recommended point is searched for, for the recreated combined Ising model.

5. The arithmetic program according to claim 1, wherein the data is vector data with a binary value.

6. An arithmetic method implemented by a computer, comprising:

   creating a plurality of Ising models by creating the Ising models for each of a plurality of characteristic values, based on a training data group that includes a plurality of pieces of training data in which data and the plurality of characteristic values for the data are associated with each other;
   creating a combined Ising model by combining the plurality of Ising models;
   searching for the data of a recommended point for the combined Ising model; and
   adding, to the training data group, the training data that includes the data of the recommended point and the plurality of characteristic values for the data of the recommended point, wherein
   the creating of the plurality of Ising models, the creating of the combined Ising model, the searching for the data of the recommended point, and the adding of the training data are repeatedly executed by the computer.

7. An information processing apparatus comprising:

   an execution unit configured to

   create a plurality of Ising models by creating the Ising models for each of a plurality of characteristic values, based on a training data group that includes a plurality of pieces of training data in which data and the plurality of characteristic values for the data are associated with each other,
   create a combined Ising model by combining the plurality of Ising models, and
   search for the data of a recommended point for the combined Ising model; and

   an update unit configured to update the training data group by adding, to the training data group, the training data that includes the data of the recommended point and the plurality of characteristic values for the data of the recommended point.

# FIG. 1

# FIG. 2

ADD RECOMMENDED POINT AND OBJECTIVE FUNCTION VALUE TO TRAINING DATA

ADD CHARACTERISTIC VALUES TOGETHER TO CALCULATE OBJECTIVE FUNCTION VALUE
$f = w_1 y_1 + w_2 y_2 + \cdots + w_N y_N$

TRAINING DATA

| No. | f | $x_1$ | $x_2$ | $x_3$ | $x_4$ | $x_5$ | $x_6$ | $x_7$ | $x_8$ | $x_9$ | $x_{10}$ | . | . | . |
|---|---|---|---|---|---|---|---|---|---|---|---|---|---|---|
| 1 | 3.60 | 1 | 1 | 0 | 1 | 0 | 1 | 1 | 0 | 1 | 1 | | | |
| 2 | 4.70 | 1 | 0 | 1 | 1 | 1 | 1 | 1 | 1 | 0 | 0 | | | |
| 3 | 4.04 | 0 | 1 | 0 | 1 | 1 | 0 | 0 | 1 | 0 | 0 | | | |
| 4 | 5.01 | 0 | 0 | 1 | 1 | 1 | 0 | 0 | 0 | 1 | 1 | | | |
| 5 | 3.62 | 1 | 1 | 0 | 1 | 0 | 0 | 1 | 1 | 1 | 0 | | | |
| 6 | 2.87 | 0 | 1 | 1 | 1 | 0 | 1 | 1 | 0 | 1 | 1 | | | |
| 7 | 4.02 | 1 | 1 | 1 | 0 | 1 | 0 | 0 | 1 | 1 | 1 | | | |
| 8 | 6.09 | 1 | 0 | 1 | 0 | 1 | 1 | 0 | 0 | 1 | 1 | | | |
| 9 | 5.22 | 0 | 1 | 0 | 1 | 0 | 1 | 0 | 0 | 1 | 1 | | | |
| 10 | 6.92 | 0 | 0 | 0 | 1 | 0 | 1 | 0 | 1 | 0 | 1 | | | |
| . | | | | | | | | | | | | . | | |
| . | | | | | | | | | | | | | . | |
| . | | | | | | | | | | | | | | . |

GENERATE FM MODELS

ANALYZE RECOMMENDED POINT, USING SOLVER, AND CALCULATE CHARACTERISTIC VALUES $(y_1, y_2, \ldots, y_N)$

CONVERSION INTO QUBO

GENERATE RECOMMENDED POINT THROUGH DA OPTIMIZATION

## FIG. 3A

100

STORAGE UNIT — 10

INITIAL POINT GENERATION UNIT — 20

EVALUATION UNIT — 30

FMDA EXECUTION UNIT — 40

TRAINING DATA UPDATE UNIT — 50

OUTPUT UNIT — 60

## FIG. 3B

CPU — 101

RAM — 102

STORAGE DEVICE — 103

INPUT DEVICE — 104

DISPLAY DEVICE — 105

# FIG. 4

START

GENERATE INITIAL POINTS ⌐S1

ANALYZE INITIAL POINTS, USING SOLVER, AND WORK OUT CHARACTERISTIC VALUES ⌐S2

COLLECT INITIAL POINTS AND CHARACTERISTIC VALUES AS TRAINING DATA ⌐S3

DIVIDE TRAINING DATA INTO DATA FOR EACH CHARACTERISTIC ⌐S4

CREATE FM MODELS SEPARATELY FOR EACH CHARACTERISTIC VALUE ⌐S5

CONVERT EACH FM MODEL INTO QUBO ⌐S6

CORRECT WEIGHTS ACCORDING TO DATA DISTRIBUTION OF CHARACTERISTIC VALUES AND CONDITION SET BY USER ⌐S7

ADD PLURALITY OF QUBOS TOGETHER WITH WEIGHTS APPLIED, TO GENERATE COMBINED QUBO ⌐S8

GENERATE RECOMMENDED POINT BY OPTIMIZING COMBINED QUBO WITH DA ⌐S9

HAS RECOMMENDED POINT BEEN RETRIEVED IN SEARCH? ⌐S10 — NO / YES

CHANGE WEIGHTS OF MODELS FOR ADDING TOGETHER ⌐S11

ANALYZE RECOMMENDED POINT, USING SOLVER, AND WORK OUT CHARACTERISTIC VALUES ⌐S12

ADD RECOMMENDED POINT AND CHARACTERISTIC VALUES TO TRAINING DATA GROUP ⌐S13

UPPER LIMIT OF NUMBER OF ITERATIONS? ⌐S14 — NO / YES

END

## FIG. 5A

| No. | $y_1$ | $y_2$ | ... | $y_N$ | $x_1$ | $x_2$ | $x_3$ | $x_4$ | ... |
|---|---|---|---|---|---|---|---|---|---|
| 1 | 0.44 | 0.83 | | 0.33 | 1 | 1 | 0 | 1 | |
| 2 | 0.35 | 0.95 | | 0.78 | 1 | 0 | 1 | 1 | |
| 3 | 0.71 | 0.21 | | 0.34 | 0 | 1 | 0 | 1 | |
| 4 | 0.55 | 0.28 | | 0.84 | 0 | 0 | 1 | 1 | |
| 5 | 0.14 | 0.12 | | 0.98 | 1 | 1 | 0 | 1 | |
| 6 | 0.1 | 0.35 | | 0.7 | 0 | 1 | 1 | 1 | |
| 7 | 0.41 | 0.28 | | 0.69 | 1 | 1 | 1 | 0 | |
| 8 | 0.91 | 0.32 | | 0.71 | 1 | 0 | 1 | 0 | |
| 9 | 0.93 | 0.26 | | 0.42 | 0 | 1 | 0 | 1 | |
| 10 | 0.95 | 0.79 | | 0.77 | 0 | 0 | 0 | 1 | |
| ... | | | | | | | | | |

## FIG. 5B

| No. | $y_1$ | $x_1$ | $x_2$ | $x_3$ | $x_4$ | ... |
|---|---|---|---|---|---|---|
| 1 | 0.44 | 1 | 1 | 0 | 1 | |
| 2 | 0.35 | 1 | 0 | 1 | 1 | |
| 3 | 0.71 | 0 | 1 | 0 | 1 | |
| 4 | 0.55 | 0 | 0 | 1 | 1 | |
| 5 | 0.14 | 1 | 1 | 0 | 1 | |
| 6 | 0.1 | 0 | 1 | 1 | 1 | |
| 7 | 0.41 | 1 | 1 | 1 | 0 | |
| 8 | 0.91 | 1 | 0 | 1 | 0 | |
| 9 | 0.93 | 0 | 1 | 0 | 1 | |
| 10 | 0.95 | 0 | 0 | 0 | 1 | |
| ... | | | | | | |

## FIG. 5C

| No. | $y_2$ | $x_1$ | $x_2$ | $x_3$ | $x_4$ | ... |
|---|---|---|---|---|---|---|
| 1 | 0.83 | 1 | 1 | 0 | 1 | |
| 2 | 0.95 | 1 | 0 | 1 | 1 | |
| 3 | 0.21 | 0 | 1 | 0 | 1 | |
| 4 | 0.28 | 0 | 0 | 1 | 1 | |
| 5 | 0.12 | 1 | 1 | 0 | 1 | |
| 6 | 0.35 | 0 | 1 | 1 | 1 | |
| 7 | 0.28 | 1 | 1 | 1 | 0 | |
| 8 | 0.32 | 1 | 0 | 1 | 0 | |
| 9 | 0.26 | 0 | 1 | 0 | 1 | |
| 10 | 0.79 | 0 | 0 | 0 | 1 | |
| ... | | | | | | |

# FIG. 6

ADD RECOMMENDED POINT
AND CHARACTERISTIC VALUES
TO TRAINING DATA

TRAINING DATA

GENERATE MODELS FOR EACH
CHARACTERISTIC VALUE

DATA · · · DATA

FM MODEL
GENERATION · · · FM MODEL
GENERATION

CONVERSION
INTO QUBO · · · CONVERSION
INTO QUBO

ADD MODELS TOGETHER WITH
WEIGHTS APPLIED
$w_1E_1(x)+w_2E_2(x)+\cdots+w_NE_N(x)$

GENERATE COMBINED QUBO

ANALYZE RECOMMENDED
POINT, USING SOLVER, AND
CALCULATE
CHARACTERISTIC VALUES
$(y_1, y_2, ..., y_N)$

GENERATE RECOMMENDED
POINT THROUGH DA
OPTIMIZATION

## FIG. 7A

COIL

MAGNETIC MATERIAL

INTENDED REGION

## FIG. 7B

COIL

96 BASES ARE LOCATED

## FIG. 7C

MAGNETIC FLUX LINES

INTENDED REGION

# FIG. 8

| POSITIVE LOCATIONS | s1 | s2 | s3 | s4 | ··· | s93 | s94 | s95 | s96 |
|---|---|---|---|---|---|---|---|---|---|
| | 0 | 0 | 1 | 0 | ··· | 1 | 1 | 1 | 1 |

+

| NEGATIVE LOCATIONS | z1 | z2 | z3 | z4 | ··· | z93 | z94 | z95 | z96 |
|---|---|---|---|---|---|---|---|---|---|
| | 0 | 0 | 0 | 0 | ··· | 1 | 0 | 1 | 0 |

| WEIGHTS OF GAUSSIAN BASIS FUNCTION | w1 | w2 | w3 | w4 | ··· | w93 | w94 | w95 | w96 |
|---|---|---|---|---|---|---|---|---|---|
| | 0 | 0 | 1 | 0 | ··· | 1 | 0 | 1 | 0 |

# FIG. 9

DISTRIBUTION OF SHAPE FUNCTION y

# FIG. 10

ALL

good ↓

COMPARATIVE EXAMPLE

-------- EMBODIMENT

ENLARGED

NUMBER OF TIMES OF CAE ANALYSIS

ITERATIVE PROCESSING PORTION

good ↓

COMPARATIVE EXAMPLE

-------- EMBODIMENT

NUMBER OF TIMES OF CAE ANALYSIS

# FIG. 11

COMPARATIVE EXAMPLE          EMBODIMENT

| E | COMPARATIVE EXAMPLE | EMBODIMENT |
|---|---|---|
| $B_{ave}^{T}$ [mT] | 0.877 | 1.079 |
| $S_{mag}$ [mm] | 5560 | 4771 |
| E | <u>0.410</u> | <u>0.367</u> |

# FIG. 12

| CHARACTERISTIC VALUE | WEIGHT | AUTOMATIC ADJUSTMENT | CORRECTION METHOD | COMPARATIVE N | CORRECTED x | DATA DISPLAY |
|---|---|---|---|---|---|---|
| y1 | 1 | off | - | - | - | GRAPH |
| y2 | 2 | STATISTICAL CORRECTION | AVERAGE VALUE | y1 | y1 | GRAPH |

FIG. 13A

y1 STATISTICS

FIG. 13B

y2 STATISTICS

**EUROPEAN SEARCH REPORT**

Europäisches Patentamt
European Patent Office
Office européen des brevets

Application Number

EP 24 19 7553

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TADAYOSHI MATSUMORI ET AL: "Application of QUBO solver using black-box optimization to structural design for resonance avoidance", ARXIV.ORG, CORNELL UNIVERSITY LIBRARY, 201 OLIN LIBRARY CORNELL UNIVERSITY ITHACA, NY 14853, 20 July 2022 (2022-07-20), XP091275288, DOI: 10.1038/S41598-022-16149-8 * page 1 - page 10; figure 1 * ----- | 1-7 | INV. G06N20/00 G06N10/60 |
| X | MARUO AKITO ET AL: "Topology Optimization of Electromagnetic Devices Using Digital Annealer", IEEE TRANSACTIONS ON MAGNETICS, IEEE, USA, vol. 58, no. 9, 21 June 2022 (2022-06-21), pages 1-4, XP011918236, ISSN: 0018-9464, DOI: 10.1109/TMAG.2022.3184325 [retrieved on 2022-06-22] * page 1 - page 4 * ----- | 1-7 | |

TECHNICAL FIELDS SEARCHED (IPC)

G06N

The present search report has been drawn up for all claims

| Place of search | Date of completion of the search | Examiner |
|---|---|---|
| The Hague | 29 January 2025 | Nourestani, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 542 466 A1**

REFERENCES CITED IN THE DESCRIPTION

**Patent documents cited in the description**

- JP 2019096334 A
- JP 2023507139 A
- JP 2023524236 A